(19) **Europäisches Patentamt / European Patent Office / Office européen des brevets**

(11) **EP 1 433 305 B1**

(12) **FASCICULE DE BREVET EUROPEEN**

(45) Date de publication et mention
de la délivrance du brevet:
**05.11.2008 Bulletin 2008/45**

(21) Numéro de dépôt: **03797490.4**

(22) Date de dépôt: **19.09.2003**

(51) Int Cl.:
**H04N 1/32** *(2006.01)*

(86) Numéro de dépôt international:
**PCT/IB2003/004178**

(87) Numéro de publication internationale:
**WO 2004/028140 (01.04.2004 Gazette 2004/14)**

(54) **PROCEDE DE MARQUAGE SPATIAL A MODULATION ASYMETRIQUE ROBUSTE A UN SUR-ECHANTILLONNAGE SPATIAL**

VERFAHREN FÜR ROBUSTES RÄUMLICHES ASYMMETRISCHES MODULATIONSMARKIEREN MIT RÄUMLICHER ÜBERABTASTUNG

METHOD FOR ROBUST ASYMMETRIC MODULATION SPATIAL MARKING WITH SPATIAL OVERSAMPLING

(84) Etats contractants désignés:
**AT BE BG CH CY CZ DE DK EE ES FI FR GB GR HU IE IT LI LU MC NL PT RO SE SI SK TR**

(30) Priorité: **20.09.2002 CH 159502**

(43) Date de publication de la demande:
**30.06.2004 Bulletin 2004/27**

(73) Titulaire: **Alpvision S.A.**
**CH-1800 Vevey (CH)**

(72) Inventeurs:
- **JORDAN, Frédéric**
  **CH-1619 Les Paccots (CH)**
- **KUTTER, Martin**
  **CH-1070 Puidoux-Village (CH)**

(74) Mandataire: **Wenger, Joel-Théophile**
**Leman Consulting S.A.**
**Chemin de Précossy 31**
**1260 Nyon (CH)**

(56) Documents cités:
**EP-A- 0 789 480        WO-A-97/40619**

**Description**

*Domaine technique*

Le domaine général concerne une technique de traitement du signal et d'image permettant de camoufler des informations de manière invisible dans des médias digitaux (image, vidéo, son) ou analogiques (imprimé).

Un marquage spatial numérique à modulation asymétrique est une extension des filigranes numériques classiques. Cette extension permet en particulier de couvrir les médias imprimés en offrant une solution pour imprimer de manière invisible un marquage spatial numérique sur un média de couleur uniforme avec une encre de couleur visible. Le domaine d'application concerne la sécurisation des documents et emballages imprimés contre la contrefaçon et la falsification.

*Etat de la technique*

Les systèmes usuels destinés à prévenir la contrefaçon ou l'altération de documents imprimés ou gravés peuvent être classés en différents groupes:

- les hologrammes, les impressions de motifs spéciaux
- les impressions avec encres spéciales ou code à encres invisibles
- les systèmes à puce ou antennes

Les hologrammes, motifs spéciaux et autres décorations sont difficiles à reproduire car leur réalisation nécessite un équipement spécial. Ils sont spécialement conçus pour interférer avec les systèmes de photocopie classique de telle sorte que la copie soit visiblement différente de l'original. Ces systèmes peuvent être contrôlés visuellement sans l'aide de dispositifs particuliers mais présentent l'inconvénient d'être coûteux, assez connus pour être reproduits sans problèmes par des experts en contrefaçon, et finalement leur visibilité nuit à l'esthétique de l'objet protégé (emballage de parfum par exemple). Leur visibilité est également la raison de leur efficacité limitée dans la mesure où un pirate peut facilement identifier l'élément de sécurité, soit pour le copier, soit pour l'effacer physiquement.

Les impressions avec encres spéciales utilisent des propriétés chimiques particulières de l'encre pour fournir une réaction déterminée à une action particulière. Ainsi, les encres fluorescentes deviennent très lumineuses quand elles sont éclairées par une longueur d'onde particulière, certaines encres sont même invisibles à la lumière naturelle, d'autres encres changent de couleur en fonction de leur orientation ou de leur température (et peuvent se révéler en chauffant le papier avec un doigt), etc. Les encres spéciales ont comme point commun d'être particulièrement coûteuses et de nécessiter d'opérer des modifications dans la chaîne de production industrielle habituelle (masque supplémentaire pour l'offset par exemple). De plus, bien que plus robuste à la contrefaçon que le groupe précédent, il est également possible de reproduire leurs effets dans la mesure où le pirate peut contrôler par lui-même la fidélité de sa copie par rapport à l'original dès qu'il dispose du dispositif faisant réagir l'encre.

Les codes utilisant des encres invisibles, à la différence des deux groupes précédents, permettent de cacher une information numérique. Ces codes peuvent être des caractères, des codes barres, des codes 2D, etc. En plus de son coût élevé et propre aux encres invisibles, ce système a deux inconvénients majeurs. D'une part, du fait de la nature des codes utilisés, il est localisé sur une certaine partie du document ou de l'emballage et il est donc possible de le détruire sans altérer la totalité de la surface. D'autre part, les codes utilisés ont toujours des particularités géométriques (barres, figures géométriques, caractères, etc) les identifiant clairement comme des dispositifs anti-copie. Cela facilite grandement la tache du pirate cherchant à révéler et à reproduire l'encre. De plus dès que le pirate sait réaliser cette reproduction, il détient ipso facto le moyen de reproduire le code.

Finalement les systèmes basés sur des mémoires ou processeurs embarqués cumulent les inconvénients d'être très coûteux, inesthétiques et localisés. Leur application principale consiste plus à sécuriser une communication, ou à stocker dynamiquement une information plutôt qu'à distinguer un original d'une copie.

La technique du filigrane numérique, également connue sous le nom de tatouage numérique, est une technique permettant de *cacher* des informations de manière *robuste et imperceptible* dans des données multimédia telles que la musique, la vidéo, les images, les documents, etc. L'information qui est cachée s'appelle la *signature.* Cette signature peut être par exemple un numéro, un nom ou même une image. Après la protection des données multimédia avec un filigrane numérique on parle d'image signée, de vidéo signée, etc.

De nombreuses publications ont été faites sur les différentes techniques permettant de cacher un filigrane dans une image, dans une vidéo ou un signal audio. En ce qui concerne les images, ces dernières peuvent se classer en fonction de la technique utilisée pour le marquage : certaines opèrent des modifications directement dans le domaine spatial (voir par exemple [1] M. Kutter, F. Jordan, F. Bossen, "Digital watermaking of color images using amplitude modulation", Journal of Electronic Imaging, vol. 7, n° 2, pp. 326-332, April 1998.), d'autres opèrent ces modifications dans un domaine transformé (par exemple le domaine fréquentiel) voire des domaines intermédiaires comme les ondelettes (voir [2] Shelby Pereira, Sviatoslav Voloshynovskiy and Thierry Pun, Optimized wavelet domain watermark embedding strategy using linear programming, In Harold H. Szu and Martin Vetterli eds., Wavelet Applications VII (part of SPIE AeroSense 2000), Orlando, Florida USA, April 26-28 2000.).

Le procédé décrit dans le brevet numéro WO0225599 (priorité CH20000001832 20000920) étend la technologie de filigrane numérique à un média imprimé, par une modulation asymétrique d'un signal indépendant du support sous-jacent et dénommé dans ce qui suit "marquage spatial". Parmi les intérêts de cette approche, on peut citer l'impression invisible sur du papier de couleur uniforme (blanche en particulier), ou la surimpression sur des imprimés (obtenus en offset en particulier). La détection de ce signal requiert un scanner numérique. Une contrainte notable de cette approche est que le scanner numérique doit avoir au moins la même résolution que celle utilisée pour imprimer le marquage. Cette limitation est par exemple contraignante en milieu industriel car les scanners haute vitesse utilisés pour numériser les documents sont incompatibles avec cette invention. En effet, les scanners haute vitesse fonctionnent à des résolutions typiquement voisines de 200 dpi, or un marquage spatial imprimé à cette même résolution de 200 dpi peut être détecté à l'oeil nu et copié avec un photocopieur.

Le document EP 0 789 480 décrit comment insérer une microstructure dans un document, essentiellement afin d'éviter une copie non autorisée. Cette structure est invisible à l'oeil mais reconnaissable par un lecteur approprié.

La présente invention décrit un procédé permettant de s'affranchir de cette contrainte et permettant donc d'utiliser un scanner basse résolution (ou toute autre méthode d'acquisition optique) pour détecter un marquage spatial imprimé à haute résolution. Ainsi, elle permet par exemple d'imprimer un marquage spatial à 600 dpi (résolution compatible avec les imprimantes industrielles) et de le détecter à 200 dpi (résolution compatible avec les scanners industriels).

### Brève description de l'invention

Un marquage spatial se présente comme un nuage de points à répartition spatiale pseudo aléatoire. Dans ce qui suit on définit « la résolution d'impression » sur la base de la taille effective du marquage spatial une fois imprimé rapporté à sa taille en pixel, et non pas comme la résolution maximale de points par unité de longueur que peut fournir l'imprimante.

Par exemple, considérons un marquage spatial de 300 par 300 pixels, imprimé avec une imprimante de résolution 1200 dpi, Supposons que la taille obtenue après impression soit de 1 pouce par 1 pouce. Dans ce cas, on considèrera que la résolution effective d'impression est de 300 points par pouce (ou 300 dpi), et non de 1200 dpi.

Afin d'illustrer le caractère critique des résolutions respectives d'impression et de numérisation, un exemple est donné dans ce qui suit pour le cas particulier de la détermination du positionnement vertical de deux points. Lorsque le marquage spatial est imprimé à une résolution de $d$ points par unité de longueur, la taille des points a un diamètre de l'ordre de $1/d$. Une numérisation de ces points peut être accomplie avec un scanner possédant une résolution $d$: la taille des points imprimés étant identiques à la résolution du numériseur, il est possible de les discriminer (le point du bas se situe à droite du point du haut). Dans le cas d'une numérisation réalisée à une résolution inférieure (par exemple deux fois inférieure), une telle discrimination est théoriquement impossible. Dans ce cas, on voit que le numériseur digitalise les deux points comme appartenant à la même ligne. Il n'y a pas de discrimination des deux points et le scanner considère qu'il n'y a en fait qu'un point.

Le même raisonnement est également valide pour la résolution horizontale de l'image. Cette limitation semble donc être fondamentalement intrinsèque à la technologie du marquage spatial et il était jusqu'ici admis que le résolution de numérisation ne pouvait en aucun cas être inférieure à celle d'impression.

Le procédé suivant montre néanmoins qu'une telle possibilité existe : une solution consiste à espacer les points de manière à compenser exactement la différence de résolution entre impression et numérisation. Dans ce cas, des lignes supplémentaires vides ont été insérées permettant un espacement vertical des points de $2/d$.

L'avantage notable de cette invention est qu'elle permet de détecter un marquage spatial avec les nombreux systèmes basés sur des scanners digitaux à basse résolution. C'est le cas en particulier des numériseurs à haut débit utilisés pour les documents papier (chèques, virements bancaires, etc.) mais aussi de certains lecteurs de carte.

Le rapport entre la résolution d'impression et la résolution de lecture est typiquement comprise entre 2 et 5.

Un autre avantage du système est qu'il permet d'augmenter l'invisibilité du marquage spatial en utilisant les deux phénomènes suivants :

• Diminution de la taille des points
• Diminution de la concentration de points par unité de surface imprimée Ces paramètres sont mathématiquement quantifiés ci-dessous.

## Liste des dessins

Figure 1: Représentation du signal et de la zone numérisée par un scanner d'une résolution deux fois plus basse que la taille des points.

Figure 2 : Représentation du signal et de la zone numérisée par un scanner de résolution identique à la taille des points.

Figure 3: Utilisation d'une résolution de numérisation plus basse que celle d'impression.

Figure 4 : Illustration du changement de l'espacement pour la dimension verticale et horizontale.

Figure 5 : Diagramme du procédé permettant d'obtenir un marquage spatial sur échantillonné et érodé.

Figure 6: Diagramme de la mise en oeuvre du marquage spatial modifié pour l'impression et la détection.

Figure 7 : Illustration de la fonction de sur échantillonnage et érosion

Figure 8 : Représentation de l'acquisition par un scanner d'un marquage spatial

Figure 9: Illustration d'un marquage spatial auto-correlé

## Description détaillée de l'invention

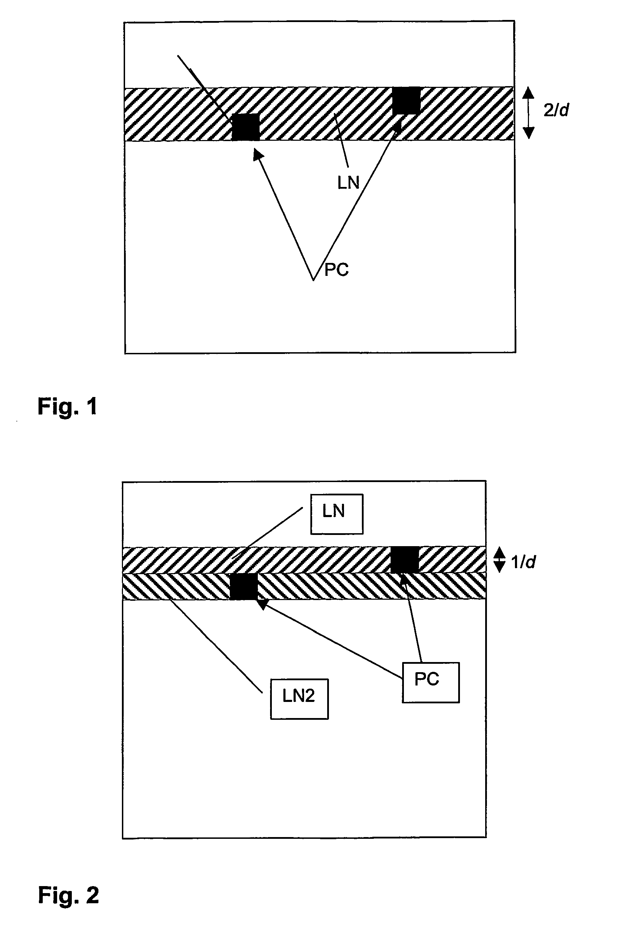

La Figure 1 illustre une bande de scanner d'une résolution inférieure à la résolution des points PC appliqué sur cette bande LN. Le scanner est actif sur une bande LN de résolution 2/d soit de moitié inférieure à la résolution d'impression 1/d.

Sur la Figure 2, le scanner est de résolution 1/d équivalente à la résolution de l'impression. La lecture de la première ligne LN1 et la seconde ligne LN2 permet de détecter sans problème les points PC de ce marquage spatial.

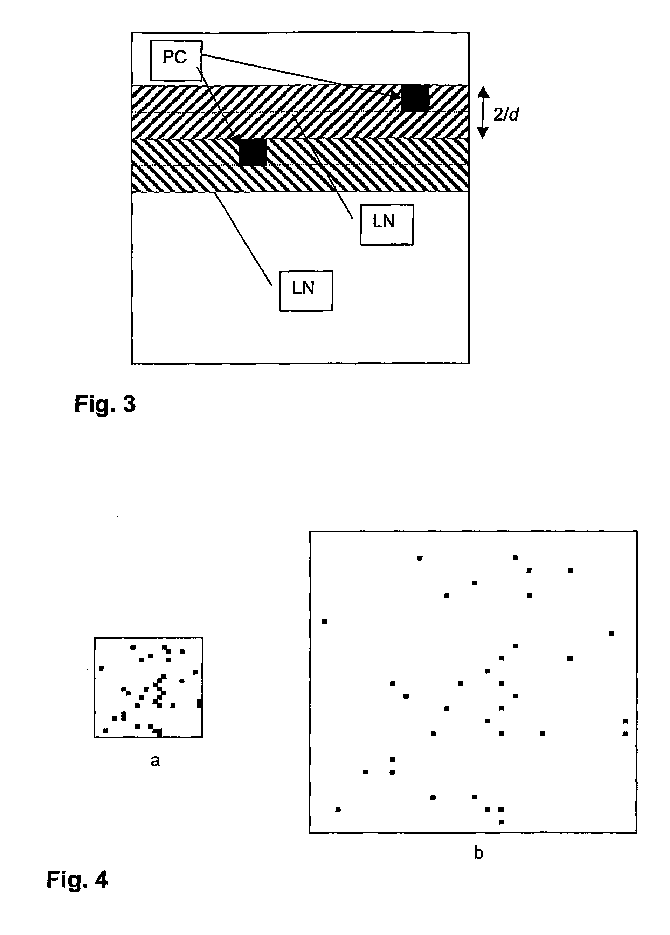

La figure 3 illustre un marquage spatial imprimé avec une résolution 1/d (la résolution des points PC). La taille du point PC est de moitié inférieure à la largeur de bande 2/d d'acquisition d'un scanner.

La figure 4 illustre le résultat d'impression d'un marquage spatial, la figure 4a étant le marquage spatial de base et la figure 4b étant le marquage spatial imprimé. Les deux marquage spatial ont un nombre de points identiques. Cet exemple est basé sur un rapport d'impression sur résolution du scanner de 3. On constate que la surface utilisée par le marquage spatial de base 4a est de taille 3 fois inférieure au marquage spatial 4b imprimé. Parallèlement, chaque point imprimé est espacé au minimum de 2 points non imprimé.

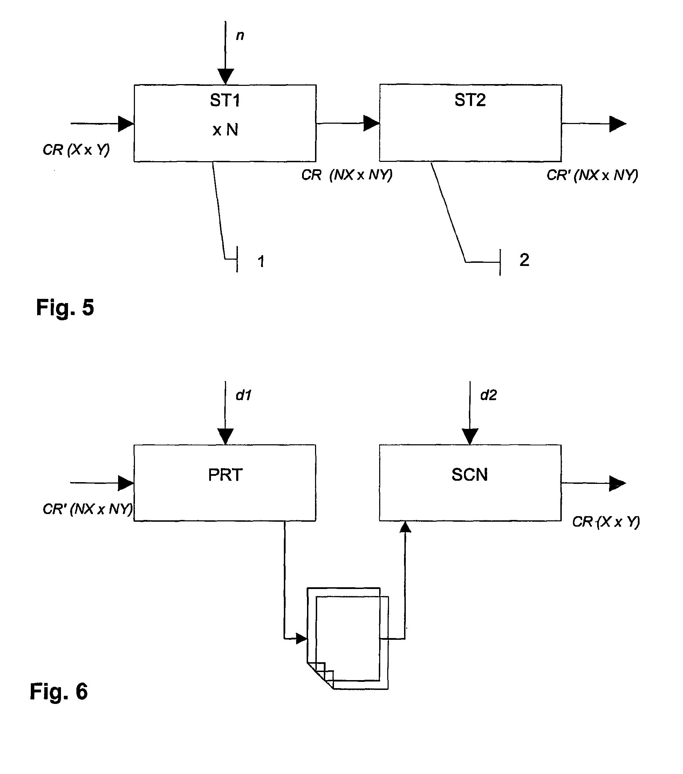

Une méthode de réalisation de l'invention est basée sur un procédé de post traitement d'une image de marquage spatial illustré par le diagramme de la Figure 5. Un marquage spatial standard à répartition pseudo aléatoire d'une taille $X{\times}Y$ est d'abord généré. Ce dernier est ensuite sur-échantillonné de manière binaire d'un facteur $n$ dans ses dimensions horizontales et verticales par un premier module ST1. Le résultat est un marquage spatial CR de taille $NX$ x $NY$ dont en particulier les points encodant le signal - porteurs de l'information redondante - font désormais une taille de $N{\times}N$. Cette image est ensuite retraitée au moyen d'un filtre érosif ST2 conduisant à des points à nouveau d'une taille de 1x1 mais dans une image faisant toujours $NX$ x $NY$. Ce procédé est ainsi qualifié de « sur-échantillonnage érosif ».

La mise en oeuvre de l'impression et détection du marquage spatial ainsi obtenu est illustrée par la Figure 6. Dans une première étape PRT, le marquage spatial CR' $(NX$ x $NY)$ est tout d'abord imprimé avec une résolution $d1$. Le support imprimé ainsi obtenu est subséquemment numérisé dans le module SCN avec une résolution $d2$.

Comme mentionné précédemment, l'objet de la présente invention est précisément que $d2 < d1$.

Il existe une relation liant mathématiquement le procédé de post traitement à la mise en oeuvre du marquage spatial. Cette dernière est donné par :

$$n = \frac{d_1}{d_2}$$

Par exemple un marquage spatial peut être imprimé avec une résolution de $d1$=300 dpi et scanné avec une résolution de $d2$=100 dpi. Dans ce cas, le rapport des résolutions est $n$=3, ce qui signifie que le nombre de points horizontaux et verticaux définissant le marquage spatial imprimé CR' est 3 fois supérieurs à celui obtenu après numérisation.

La numérisation avec une résolution $d2$ du marquage spatial post traité conduit à une diminution du contraste entre les points numérisés et le fond qui dépend du rapport $n$. La couleur finale $c'$ du point numérisé peut être calculée: soit $b$ la couleur de fond et $c$ la couleur des points du marquage spatial (tous deux compris entre 0 et 1). $c'$ est alors calculée en tenant compte du fait qu'il y a un seul point de couleur $c$ et $n^2$-$1$ points de couleur $b$:

$$c' = \frac{b \cdot \left( n^2 - 1 \right) + c}{n^2}$$

Dans le cas particulier d'un signal noir $c=0$ sur fond blanc $b=1$, on peut constater que $c' > c$, et que cette couleur moyenne se rapproche de celle du fond ($b=1$), cela d'autant plus que $n$ est grand. Le contraste du signal par rapport au fond est donc diminué, ce qui augmente l'invisibilité en même temps que le rapport signal bruit qui caractérise la clarté du marquage spatial par rapport au support sur lequel il est imprimé. Par exemple, pour n=3, un signal noir $c=0$ sur fond blanc $b=1$, la couleur du point numérisé sera $c'=0.88$. Cela correspond à une diminution du contraste avec la couleur de fond de 88% par rapport à la couleur initiale du point noir.

La méthode décrite ci-dessus peut être généralisée aux cas d'un traitement anisotrope du marquage spatial. Dans ce cas, les résolutions utilisées pour la numérisation et l'impression sont différentes selon les directions $x$ et $y$. Comme cette méthode agit indépendamment sur chacune de ces dimensions, elle peut être appliquée directement. Les relations se généralisent alors en considérant la résolution selon les directions $x$ et $y$ utilisées pour l'impression (resp. $d1x$ et $d1y$) et celles utilisées pour la numérisation (resp. $d2x$ et $d2y$) donnant le facteur de sur échantillonnage érosif selon les directions $x$ et $y$, respectivement $nx$ et $ny$ :

$$nx = \frac{d_{1x}}{d_{2x}}$$

$$ny = \frac{d_{1y}}{d_{2y}}$$

Ces facteurs sont en particulier applicables dans le cas d'imprimantes industrielles à jet d'encre dont la vitesse de défilement du papier est susceptible d'engendrer une résolution différente dans les deux dimensions, un effet similaire peut également être constaté sur un scanner.

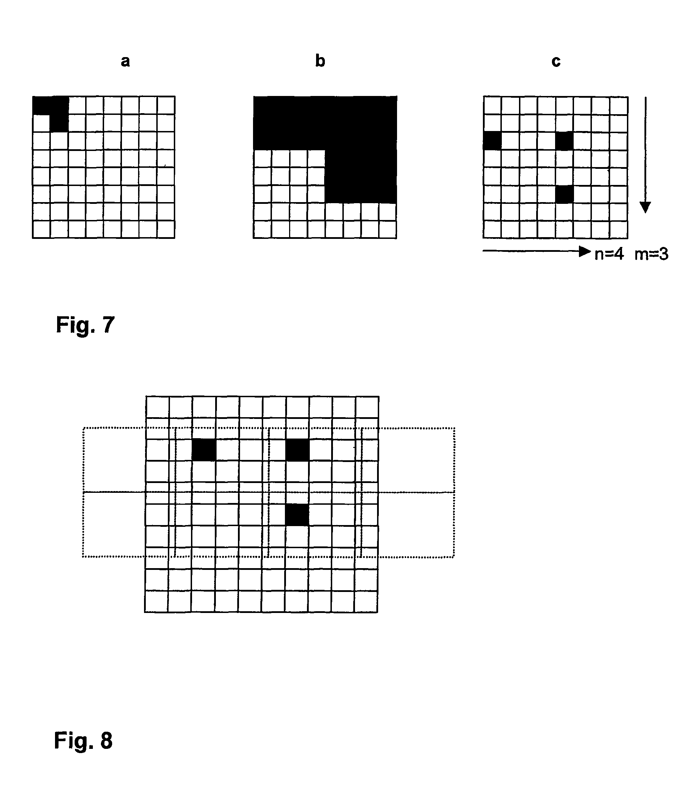

La figure 7 illustre le procédé de préparation d'un marquage spatial selon l'invention. La figure 7a montre le marquage spatial de base à une résolution $d$ La première étape est l'étape de sur échantillonnage en fonction de la résolution sur scanner. Selon l'exemple illustré à la figure 7b, la résolution en x est quatre fois ($n$) inférieure et la résolution en y est trois fois ($m$) inférieure à celle de l'impression.

Pour illustrer le processus d'érosion, la figure 7c illustre une alternative qui consiste à ne choisir que l'un des points selon sa position. Ainsi, selon cet exemple, le point retenu est celui en bas à gauche. Le marquage spatial résultant comprend nécessairement des points espacés de sorte que seulement un point soit pris lors d'une acquisition à la résolution maximale du scanner.

Le fonctionnement du scanner est illustré par la figure 8. Son fonctionnement est essentiellement asynchrone et chaque zone d'acquisition ne correspond pas forcément avec la division du marquage spatial lors de l'impression. Une zone d'acquisition est illustrée par une ligne pointillée. On constate que pour une zone donnée, il ne reste qu'un seul point de marquage spatial ce qui autorise un traitement efficace.

### *Conception générale du marquage spatial*

Concevoir le marquage spatial revient à déterminer quels sont les points qui doivent être imprimés et ceux qui doivent laisser apparaître le fond du document. Cette conception prend en compte la méthode utilisée pour le décodage.

Le décodage du marquage spatial requiert l'utilisation de ses propriétés d'autocorrélation, d'intercorrélation et de corrélation statistiques avec les données encodées respectivement pour compenser les transformations géométriques affines, les translations et le bruit éventuel du signal. Les propriétés d'autocorrélation et de corrélation sont définies lors de la conception du marquage spatial et doivent prendre en compte le niveau de sous échantillonnage désiré. Au niveau théorique, les points encodent une information binaire selon un procédé d'étalage de spectre et ces points sont également choisis pour que l'image obtenue possède des propriétés d'autocorrélation (voir par exemple M. Kutter, F. Jordan, F. Bossen, "Digital watermaking of color images using amplitude modulation", Journal of Electronic Imaging, vol. 7, n° 2, pp. 326-332, April 1998). Les paragraphes ci-dessous décrivent un mode de réalisation d'une méthode de conception d'un marquage spatial corrélé à une information binaire et d'un marquage spatial autocorrélé.

**Conception d'un marquage spatial corrélé avec une information binaire**

Soit $i=\{-1,1\}$ la valeur d'un bit à encoder. Soit $\{x,y\}$ un ensemble de points choisis pseudo aléatoirement (sur la base d'une clé) parmi tous les points de l'image $X \times Y$ et $k$ un index identifiant chacune des coordonnées $\{x,y\}$ de ces points. Soit $a(k)$ un générateur pseudo-aléatoire défini par une deuxième clé et donnant des valeurs $\{-1,1\}$. Soit $v$, une couleur comprise entre 0 (noir/couleur) et 1 (blanc). Soit $c(k)$ la couleur finale du point $k$ du marquage spatial. La formule suivante est alors appliquée :

$$\text{Si } i.a(k) > 0 \text{ alors } c(k) = v \text{ sinon } c(k) = 1$$

Par exemple, si un seul bit est codé avec $k$ variant de 0 à 99, une couleur de marquage spatial $v=0$, et $a(k) = k \text{ modulo } 2$, cela signifie que l'image du marquage spatial sera composée de 50 points noirs et 50 points blancs, tous les autres points du marquage spatial restant blancs. Ces points encoderont ce bit avec une redondance de 100.

**Conception d'un marquage spatial autocorrélé**

Une méthode permettant d'obtenir un marquage spatial présentant une propriété d'autocorrélation consiste à concevoir l'image numérique du marquage spatial en dupliquant 4 fois l'ensemble des points $\{x,y\}$. Cette duplication peut être effectuée en translatant l'ensemble des points selon 4 vecteurs définis par $(0,0)$, $(0,S)$, $(S,0)$, $(S,S)$ où $S$ défini la distance de translation. Il est possible de réaliser cette duplication en utilisant la méthode suivante:

- o Sélection d'un ensemble de points $\{x,y\}$ telles que les coordonnées (x,y) sont paires
- o Sélection d'une distance de translation impaire $S$
- o Création du marquage spatial avec les 4 ensembles de points $\{x,y\}$, $\{x+S,y\}$, $\{x,y+S\}$, $\{x+S,y+S\}$

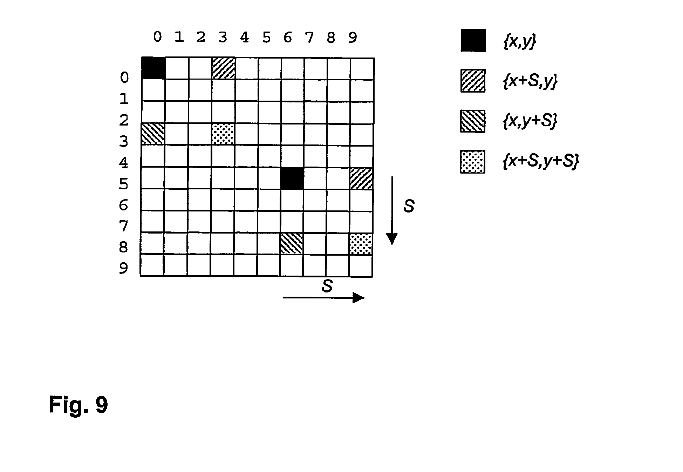

Cette méthode garantie qu'aucun des points des 4 ensembles ne se juxtaposent. La figure 9 illustre cette approche avec un ensemble $\{x,y\}$ comprenant 2 points et une translation $S=3$.

Lors de cette opération, certains points sont susceptibles d'avoir des coordonnées supérieurs à la taille de l'image du marquage spatial $X \times Y$. Une méthode consiste à effectuer la translation en utilisant un modulo sur la taille de l'image. Les formules suivantes illustrent la méthode du modulo pour la coordonnée horizontale x:

$$\{x+S\} = x+S \text{ si } x+S<X$$

$$\{x+S\} = x+S-X \text{ si } x+S>X$$

Le même principe est appliqué à la coordonnée $y$.

L'autocorrélation ainsi introduite est utilisée pour compenser une transformation géométrique de type affine éventuellement produite par l'acquisition numérique du marquage spatial. Soit x,y les coordonnées d'un point du cryptoglyph avant impression et x',y' les coordonnées de ce point après numérisation, la relation affine entre ces coordonnées s'écrit:

$$x' = ax + by$$

$$y' = cx + dy$$

Une fois les coefficients $(a,b,c,d)$ déterminés à partir de la position de la figure d'autocorrélation, il est donc possible d'établir les coordonnées (x,y) originales en compensant la transformation géométrique induite par l'acquisition numérique.

**Conception d'un marquage spatial robuste au sous-échantillonage**

Dans le cas particulier de la présente invention, le décodage du signal est rendu difficile car le sous-échantillonnage produit par la numérisation basse résolution entraîne une diminution du contraste entre les points et la couleur de fond, ce contraste diminuant de plus avec le carré de *n*. Deux solutions sont utilisées pour compenser cette diminution du rapport signal bruit:

o Augmentation de la redondance du codage Pour une image de taille *X x Y*, la redondance du codage est définie par la formule suivante:

$$r = \frac{X \cdot Y \cdot p}{b}$$

où la densité *p*, comprise entre 0 et 1, définie la proportion de points imprimés par rapport à la taille de l'image en pixels, et *b* défini le nombre de bits encodés. Ainsi si l'on considère l'image d'un marquage spatial de taille 100 par 100 pixels dont la densité est de 0.1 et encode 10 bits, on obtient une redondance de 100.
o Augmentation du contraste entre la couleur du point et le fond Pour cela il faut choisir une couleur d'encre c qui maximise la valeur absolue |*c-b*|.

Ces deux solutions peuvent être utilisées séparément ou simultanément. Elles sont mises en oeuvre de manière empirique, sachant que:

Au delà d'un certain seuil qui dépend entre autre de la couleur d'impression, du support d'impression et de la résolution d'impression, il n'est pas possible d'augmenter simultanément la densité et le contraste car le marquage spatial devient visible.
La valeur de redondance ne peut pas descendre sous un certain seuil qui dépend des altérations que le support imprimé est susceptible de subir, faute de quoi des erreurs de décodage sont susceptibles de se produire.

**Mise en oeuvre des propriétés du marquage spatial pour le processus de détection**

Les propriétés du marquage spatial définies précédemment permettent d'effectuer un décodage fiable qui se décompose selon les étapes suivantes

- acquisition numérique d'une image du support,

- filtrage sur l'image obtenue pour éliminer les parties ne comprenant pas le marquage spatial. Ce filtrage peut prendre compte les caractéristiques d'un graphisme éventuellement imprimé sur le support. Il peut être réalisé en utilisant une compensation basée sur une couleur uniforme ou par une prédiction des couleurs du support avant impression du graphisme. Une telle prédiction peut être réalisée par un filtre de débruitage (de type Wiener par exemple).

- utilisation des propriétés d'autocorrélation pour compenser toute transformation affine introduite par l'acquisition, ainsi que décrit précédemment.

- compensation en translation du marquage spatial en utilisant une intercorrélation entre le marquage spatial obtenu et l'ensemble des positions possibles du marquage spatial défini par une clé,

- décodage de l'information numérique par corrélation statistique pour chaque bit de l'information.

**Autres procédés de marquage**

Dans ce qui précède c'est essentiellement le procédé de marquage par impression qui a été cité. Cependant, tout procédé conduisant à obtenir un point pouvant être distingué par rapport à un fond peut être utilisé. Par exemple, et de manière non exhaustive, on peut citer la gravure par laser des points sur une surface en verre pour cacher un code invisible. Il est également possible d'utiliser des points présentant des particularités magnétiques différentes de celles du fond.

**Autres procédés d'acquisition**

La présente invention peut être directement généralisée à la détection de propriétés non optiques des points (électriques, magnétiques, position en profondeur/hauteur). Le processus d'acquisition numérique du marquage spatial d'une surface (produit ou document) peut être également totalement dissocié du processus de traitement numérique permettant de détecter ce marquage. Par exemple, il est possible de photographier numériquement une surface marquée et d'envoyer l'image par réseau à un ordinateur distant qui réalise la détection. Le résultat de cette détection peut également être renvoyé à l'opérateur. Le développement des téléphones portables disposants de caméra à faible résolution rend le procédé de l'invention très attractif.

**Revendications**

1. Procédé de génération et d'application sur un support d'un marquage spatial numérique de X x Y points selon une résolution de d1x par d1y points par unité de surface, et destiné à être lu par un dispositif de lecture de résolution d2x par d2y points par unité de surface, étant entendu que le rapport d1x/d2x et/ou d1y/d2y est plus grand que 1, ce procédé **étant caractérisé par** les étapes suivantes :

   - sur-échantillonage du marquage spatial numérique en X selon un facteur nx= d 1 x/d2x et en Y selon un facteur ny= d 1 y/d2y,
   - érosion des points destinés à être appliqués de sorte de laisser un point tous les nx points en X et un point tous les ny points en Y,
   - application du marquage spatial sur le support.

2. Procédé de génération et d'application d'un marquage spatial selon la revendication 1, **caractérisé en ce que** la résolution du dispositif de lecture est identique en X et en Y soit d2x = d2y.

3. Procédé de génération et d'application d'un marquage spatial selon la revendication 1 ou 2, **caractérisé en ce que** la résolution du marquage spatial initial est identique en X et en Y soit d1x = d1y.

4. Procédé de génération et d'application d'un marquage spatial selon la revendication 1 ou 2, **caractérisé en ce que** le rapport de résolution en X (nx) et le rapport de résolution en Y (ny) est compris entre 2 et 5, 2 et 5 étant inclus.

5. Procédé de reconnaissance d'un marquage spatial appliqué selon le procédé des revendications 1 à 4, **caractérisé en ce qu'**il comporte les étapes suivantes:

   - acquisition numérique d'une image du support,
   - filtrage sur l'image obtenue pour éliminer les parties ne comprenant pas le marquage spatial,
   - utilisation des propriétés d'autocorrélation pour compenser toute transformation affine introduite par l'acquisition,
   - compensation en translation du marquage spatial en utilisant une inter-corrélation entre le marquage spatial obtenu et l'ensemble des positions possibles du marquage spatial défini par une clé,
   - décodage de l'information numérique par corrélation statistique pour chaque bit de l'information.

6. Procédé de détection d'un marquage spatial selon la revendication 5 **caractérisé en ce que** l'étape de filtrage est basée sur une compensation d'une couleur uniforme initiale.

7. Procédé de détection d'un marquage spatial selon la revendication 5 **caractérisé en ce que** l'étape de filtrage est basée sur une prédiction de l'image du support initial par un filtre de débruitage.

8. Procédé de détection d'un marquage spatial selon les revendications 5 à 7, **caractérisé en ce que** l'acquisition numérique de l'image est réalisée par un scanner.

9. Procédé de détection d'un marquage spatial selon les revendications 5 à 7, **caractérisé en ce que** l'acquisition numérique de l'image est réalisée en utilisant un détecteur portable.

10. Procédé de détection d'un marquage spatial selon les revendications 5 à 7, **caractérisé en ce que** l'acquisition et le traitement du marquage spatial sont réalisés en deux lieux géographiques distants.

**11.** Procédé d'application du marquage spatial selon les revendications 1 à 4, **caractérisé en ce que** le procédé d'application du marquage spatial sur le support est constitué par une impression.

**12.** Procédé d'application du marquage spatial selon les revendications 1 à 4, **caractérisé en ce que** le procédé d'application du marquage spatial sur le support est constitué par une gravure.

**Claims**

**1.** Generation and application process on a support of a digital spatial marking of X x Y points according to a resolution of d1x by d1y points per surface unit and intended to be read by a reading device with a resolution of d2x by d2y points per surface unit, taking into account that the ratio d1x/d2x and/or d1y/d2y is larger than 1, this process comprising the following steps:

- over-sampling of the digital spatial marking in X according to a factor nx= d1x/d2x and in Y according to a factor ny= d1y/d2y,
- erosion of the points intended to be applied so as to leave one point every nx points in X and one point every ny points in Y,
- application of the spatial marking on the support.

**2.** Generation and application process of a spatial marking according to claim 1, **characterized in that** the resolution of the reading device is identical in X and in Y that is to say d2x = d2y.

**3.** Generation and of application process of a spatial marking according to claim 1 or 2, **characterized in that** the resolution of the initial spatial marking is identical in X and in Y that is to say d1x = d1y.

**4.** Generation and application process of a spatial marking according to claim 1 or 2, **characterized in that** the ratio of resolution in X (nx) and the ratio of resolution in Y (ny) is comprised between 2 and 5, 2 and 5 inclusive.

**5.** Process of recognition of a spatial marking applied according to the process of the claims 1 to 4, **characterized in that** it includes the following steps:

- digital acquisition of an image of the support,
- filtering on the image obtained to eliminate the parts not comprising the spatial marking,
- use of autocorrelation properties to compensate every affine transformation introduced by the acquisition,
- compensation in translation of the spatial marking using an intercorrelation between the obtained spatial marking and the group of possible positions of the spatial marking defined by a key,
- decoding of the digital information by statistical correlation for each bit of information.

**6.** Detection process of a spatial marking according to claim 5 **characterized in that** the filtering stage is based on a compensation of a uniform initial colour.

**7.** Detection process of a spatial marking according to claim 5 **characterized in that** the filtering stage is based on a prediction of the image of the initial support by a soundproofing filter.

**8.** Detection process of a spatial marking according to claims 5 to 7, **characterized in that** the digital acquisition of the image is carried out by a scanner.

**9.** Process of detection of a spatial marking according to claims 5 to 7, **characterized in that** the digital acquisition of the image is carried out using a portable detector.

**10.** Process of detection of a spatial marking according to claims 5 to 7, **characterized in that** the acquisition and processing of the spatial marking are carried out in two geographically remote locations.

**11.** Application process of the spatial marking according to claims 1 to 4, **characterized in that** the application process of the spatial marking on the support is constituted by a printing process.

**12.** Application process of the spatial marking according to claims 1 to 4, **characterized in that** the application process of the spatial marking on the support is constituted by an engraving process.

**Patentansprüche**

**1.** Verfahren, eine digitale räumliche Markierung von X x Y Punkten mit einer Auflösung von d1x $\times$ d1y Punkten je Flächeneinheit zu erzeugen und auf einen Träger aufzubringen, wobei diese Markierung dazu bestimmt ist, durch eine Lesevorrichtung mit einer Auflösung von d2x x d2y Punkten je Flächeneinheit gelesen zu werden, und zu verstehen ist, dass das Verhältnis von d1x/d2x und/oder d1y/d2y grösser als 1 ist und das Verfahren **durch** die folgenden Schritte **gekennzeichnet** ist:

- Überabtastung der digitalen räumlichen Markierung in der X-Richtung mit einem Faktor von nx = d1x/d2x und in der Y-Richtung mit einem Faktor von ny = d1y/d2y,
- Erosion der aufzubringenden Punkte, dergestalt, dass alle nx Punkte in der Richtung von X und alle ny Punkte in der Richtung von Y ein Punkt übrig bleibt,
- Aufbringen der räumlichen Markierung auf den Träger.

**2.** Verfahren nach Anspruch 1, eine räumliche Markierung zu erzeugen und aufzubringen, **dadurch gekennzeichnet, dass** die Auflösung der Lesevorrichtung in der X- und Y-Richtung identisch ist, nämlich d2x = d2y.

**3.** Verfahren nach Anspruch 1 oder 2, eine räumliche Markierung zu erzeugen und aufzubringen, **dadurch gekennzeichnet, dass** die anfängliche Auflösung der räumlichen Markierung in der X- und Y-Richtung identisch ist, nämlich d1x = d1y.

**4.** Verfahren nach Anspruch 1 oder 2, eine räumliche Markierung zu erzeugen und aufzubringen, **dadurch gekennzeichnet, dass** das Verhältnis der Auflösungen in der X-Richtung (nx) und das Verhältnis der Auflösungen in der Y-Richtung (ny) zwischen 2 und 5 liegen, die Werte von 2 und 5 eingeschlossen.

**5.** Verfahren der Erkennung einer nach dem Verfahren der Ansprüche 1 bis 4 aufgebrachten räumlichen Markierung, **dadurch gekennzeichnet, dass** es die folgenden Schritte umfasst:

- digitale Erfassung eines Bildes des Trägers,
- Filtern des gewonnenen Bildes, um die Abschnitte zu eliminieren, die keine räumliche Markierung umfassen,
- Nutzung der Autokorrelationseigenschaften, um jegliche durch die Erfassung eingeführte affine Transformation zu kompensieren,
- Kompensation der räumlichen Markierung in Translation, indem eine Interkorrelation zwischen der gewonnenen räumlichen Markierung und der durch einen Schlüssel definierten Gesamtheit der möglichen Positionen der räumlichen Markierung genutzt wird,
- Dekodierung der digitalen Daten durch statistische Korrelation für jedes Datenbit.

**6.** Verfahren der Erkennung einer räumlichen Markierung nach Anspruch 5, **dadurch gekennzeichnet, dass** der Schritt des Filterns auf einer Kompensation einer anfänglichen einheitlichen Farbe beruht.

**7.** Verfahren der Erkennung einer räumlichen Markierung nach Anspruch 5, **dadurch gekennzeichnet, dass** der Schritt des Filterns auf einer Vorhersage des anfänglichen Trägerbildes durch ein Entrauschungsfilter beruht.

**8.** Verfahren der Erkennung einer räumlichen Markierung nach Ansprüchen 5 bis 7, **dadurch gekennzeichnet, dass** die digitale Erfassung des Bildes durch einen Scanner erfolgt.

**9.** Verfahren der Erkennung einer räumlichen Markierung nach Ansprüchen 5 bis 7, **dadurch gekennzeichnet, dass** die digitale Erfassung des Bildes unter Benutzung eines tragbaren Detektors erfolgt.

**10.** Verfahren der Erkennung einer räumlichen Markierung nach Ansprüchen 5 bis 7, **dadurch gekennzeichnet, dass** die Erfassung und die Verarbeitung der räumlichen Markierung an zwei voneinander entfernten geographischen Orten erfolgen.

**11.** Verfahren des Aufbringens der räumlichen Markierung nach Ansprüchen 1 bis 4, **dadurch gekennzeichnet, dass** das Verfahren des Aufbringens der räumlichen Markierung auf den Träger aus einem Drucken besteht.

**12.** Verfahren des Aufbringens der räumlichen Markierung nach Ansprüchen 1 bis 4, **dadurch gekennzeichnet, dass** das Verfahren des Aufbringens der räumlichen Markierung auf den Träger aus einem Gravieren besteht.

**Fig. 1**

**Fig. 2**

**Fig. 3**

a

b

**Fig. 4**

$n$

| ST1 | | ST2 |
|-----|-----|-----|

CR (X x Y)          ST1 x N          CR (NX x NY)          ST2          CR' (NX x NY)

1          2

## Fig. 5

$d1$          $d2$

PRT          SCN

CR' (NX x NY)          CR (X x Y)

## Fig. 6

a  b  c

n=4  m=3

**Fig. 7**

**Fig. 8**

**Fig. 9**

## RÉFÉRENCES CITÉES DANS LA DESCRIPTION

**Documents brevets cités dans la description**

- WO 0225599 A
- CH 20000001832
- CH 20000920
- EP 0789480 A

**Littérature non-brevet citée dans la description**

- **M. KUTTER ; F. JORDAN ; F. BOSSEN.** Digital watermaking of color images using amplitude modulation. *Journal of Electronic Imaging,* Avril 1998, vol. 7 (2), 326-332
- Wavelet Applications VII (part of SPIE AeroSense 2000). 26 Avril 2000